# EUROPÄISCHE PATENTSCHRIFT

(11) **EP 2 639 104 B1**
(45) Veröffentlichungstag und Bekanntmachung des Hinweises auf die Patenterteilung: **03.08.2016**
(21) Anmeldenummer: 12159831.2
(22) Anmeldetag: 16.03.2012
(51) Int. Cl.: B60P 1/16, F15B 11/00

(54) **Hydrauliksteuerung eines einfach wirkenden Kipperzylinders**
Hydraulic device of a simple tipper cylinder
Commande hydraulique d'un vérin de basculement facilement actionnable

(43) Veröffentlichungstag der Anmeldung: 18.09.2013
(73) Patentinhaber: HAWE Hydraulik SE, 81673 München (DE)
(72) Erfinder: Macit, Recep, 81673 München (DE); Burmeister, Daniel, 80639 München (DE); Manhart, Anton, 84405 Dorfen (DE)
(74) Vertreter: Grünecker Patent- und Rechtsanwälte PartG mbB

(56) Entgegenhaltungen:
- DE-U1- 20 007 520

## Beschreibung

Die Erfindung betrifft eine Hydrauliksteuerung eines einfach wirkenden Kipperzylinders gemäß Oberbegriff des Patentanspruchs 1.

Bei einer gattungsgemäßen, aus einer Bedienungsanleitung "Einbauhinweise für MEILLER-Mehrkolben-Hubpressen mit Abstellung für hydraulische Abstellung", Ausgabe 12. 2010, Registriernummer 0000 0322 060, der Firma F.X. MEILLER Fahrzeug- und Maschinenfabrik - GmbH & Co. KG, D-80997 München (info@meiller.com / www.meiller.com) bekannten Hydrauliksteuerung ist das entsperrbare Rückschlagventil in einem das untere Ende des Kipperzylinders schwenkbar lagernden Block untergebracht, an den die Arbeitsleitung angeschlossen ist, und aus dem eine Bypassleitung zu einem separaten Ventilblock führt. An dem Block ist ein mechanischer Taster für die Kipplage des Kipperzylinders schwenkbar, der bei einer Auslenkung kurz vor der Endstellung des Kipperzylinders über einen Stößel das Rückschlagventil mechanisch entsperrt, und den Druck der Arbeitsleitung über die Bypassleitung auf einen Betätigungskolben im separaten Ventilblock leitet. Im Ventilblock ist das Umlauf-Sitzventil koaxial zum Sitzventil angeordnet, sowie das Systemdruckbegrenzungsventil, das über den Steuerkolben gegen Federkräfte mechanisch aufsteuerbar ist, so dass bei mechanisch vom Taster entsperrtem Rückschlagventil die Fördermenge aus der Arbeitsleitung in die Tankleitung abströmt und der Kipperzylinder nicht mehr weiter ausgefahren wird. Das Umlauf-Sitzventil wird von einer Kolbenstange eines Pneumatikzylinders mit einem extern erzeugten pneumatischen Drucksignal aufgesteuert, einerseits um den im Ausfahren begriffenen Kipperzylinder anzuhalten, wobei dann die Fördermenge der weiterhin arbeitenden Druckquelle in die Tankleitung geleitet wird, und andererseits um den Kipperzylinder unter der Last der Brücke einzufahren, indem sowohl die Fördermenge der weiterhin betriebenen Druckquelle wie auch das Druckmittel aus dem Kipperzylinder über das dann mechanisch und pneumatisch aufgesteuerte Sitzventil in die Tankleitung abströmt. Der Aufbau der Hydrauliksteuerung ist vielteilig und beansprucht unzweckmäßig viel Einbauraum. Umständlich ist ferner die Erzeugung des externen Drucksignals auf pneumatischem Weg. Da der Taster erst unmittelbar vor Erreichen der Endstellung des Kipperzylinders anspricht, reagiert die Hydrauliksteuerung nicht auf ein intern vom Kipperzylinder selbst erzeugtes Drucksignal im Falle einer Kollision der angehobenen Brücke mit einem Hindernis. Der Taster unterliegt starkem Verschleiß, und neigt bei unvermeidlichen Verschmutzungen zu Funktionsstörungen, so dass dann der Kipperzyiinder unerwünscht bis auf Anschlag ausgefahren wird, ohne dass die Hydrauliksteuerung anspricht. Dann fördert die Druckquelle gegen das Systemdruckbegrenzungsventil, was zu hoher mechanischer und thermischer Belastung des Hydraulikmediums führt, bis zum Verbrennen des Hydraulikmediums.

Aus DE 20 007 520 U1 ist eine ähnliche, als Hubabstellung bezeichnete Hydrauliksteuerung eines einfach wirkenden Kipperzylinders bekannt, bei der das entsperrbare Rückschlagventil mechanisch über einen die Relativposition des Kipperzylinders abgreifenden Taster entsperrbar ist, um das Umlauf-Sitzventil in eine Stellung für drucklosen Umlauf der Fördermenge der Druckquelle zum Tank zu schalten. Das entsperrbare Rückschlagventil ist hier insofern einem Schließglied des Umlauf-Sitzventils zugeordnet, als es einen hydraulischen Aufsteuerdruck, abgegriffen aus der Arbeitsleitung stromauf des Kipperzylinders, an eine hydraulische Aufsteuerung des Umlauf-Sitzventils überträgt.

Der Erfindung liegt die Aufgabe zugrunde, eine Hydrauliksteuerung der eingangs genannten Art zu schaffen, die baulich einfach, rein hydraulisch und kompakt ist, sowie wahlweise auf ein externes Drucksignal oder ein internes Drucksignal anspricht, wobei im Falle der Nutzung eines internen Drucksignals das Ansprechen der Hydrauliksteuerung auch gewährleistet sein soll, wenn der Kipperzylinder vor der Endstellung auf unvorhersehbaren Widerstand treffen sollte.

Die gestellte Aufgabe wird mit den Merkmalen des Patentanspruchs 1 gelöst.

Die Hydrauliksteuerung umfasst nur einen einzigen Block, in dem sämtliche hydraulischen Komponenten zusammengefasst sind, und der nur geringen Einbauraum benötigt. Das Umlauf-Sitzventil wird beispielsweise zum langsamen Ausfahren des Kipperzylinders eingesetzt. Das Umlauf-Sitzventil lässt bei Nutzen eines internen Drucksignals aus dem Kipperzylinder die Fördermenge der Druckquelle im Wesentlichen drucklos in die Tankleitung abströmen, unabhängig davon, wie weit der Kipperzylinder ausgefahren ist. Da das Rückschlagventil hydraulisch entsperrbar ist, entfallen verschleiß- oder verschmutzungsträchtige mechanische Schnittstellen. Insbesondere bei Eingliederung des hydraulisch entsperrbaren Rückschlagventils in das Schließglied des Umlauf-Sitzventils spricht dieses sehr unmittelbar an. Ein ähnlich gutes Ansprechverhalten wird aber auch gewährleistet, wenn das hydraulisch entsperrbare Rückschlagventil vom Schließglied des Umlauf-Sitzventils getrennt in einer das Schließglied umgehenden Leitungsschleife angeordnet ist. Dann können nämlich das Umlauf-Sitzventil und das Sitzventil sogar Gleichteile sein.

Bei einer vorteilhaften Ausführungsform weist das Umlauf-Sitzventil in einer mit der Druckleitung verbundenen Kammer einen zwischen der Druckleitung und der Tankleitung angeordneten Ventilsitz auf. Dieser wirkt mit einer Dichtfläche des in Schließrichtung federbelasteten Schließgliedes zusammen. Das Schließglied besitzt einen Kolben mit einer größeren Beaufschlagungsfläche als die Querschnittsfläche des Ventilsitzes und trennt die mit der Druckleitung verbundene Kammer von einer mit der Bypassleitung verbundenen Steuerkammer des Umlauf-Sitzventils. Das hydraulisch entsperrbare Rückschlagventil ist funktionell zwischen der Dichtfläche des Schließgliedes und der Steuerkammer angeordnet und mit seinem Entsperranschluss an eine von der Kammer, der Druckleitung und der Tankleitung isolierte Entsperrleitung angeschlossen. In die Entsperrleitung kann wahlweise das interne Drucksignal oder das externe

Drucksignal, bzw. nur das interne Drucksignal oder das externe Drucksignal eingespeist werden, um durch Entsperren des Rückschlagventils das Umlauf-Sitzventil aufzusteuern.

Zweckmäßig weist ferner das Sitzventil in einer mit der Arbeitsleitung verbundenen Kammer, z.B. direkt im Block, einen zwischen der Arbeitsleitung und der Druckleitung angeordneten Ventitsitz auf. Dieser wirkt mit einer Dichtfläche eines in Schließrichtung federbelasteten Schließgliedes zusammen. Das Schließglied weist einen Kolben mit größerer Beaufschlagungsfläche als die Querschnittsfläche des Ventilsitzes auf und trennt die Kammer von einer mit einer Steuerleitung zum Systemdruckbegrenzungsventil verbundenen Steuerkammer z.B. ebenfalls im Block. An die Kammer kann eine von der Steuerleitung abzweigende, ein in Richtung zur Steuerkammer sperrendes Rückschlagventil enthaltende Stichleitung angeschlossen sein, die, beispielsweise, den in der vom Systemdruckbegrenzungsventil überwachten Steuerleitung herrschenden Druck in die Kammer überträgt, oder ein durch den Kipperzylinder in der Arbeitsleitung erzeugtes Drucksignal aus der Kammer abgreift.

Günstig sind weiterhin, vorzugsweise im selben Block, in der Steuerleitung zwischen der Steuerkammer des Sitzventils und der Stichleitung ein erstes, unbestromt zumindest in Abströmrichtung aus der Steuerkammer sperrendes 2/2-Wege-Magnetschaltventil, vorzugsweise mit einem Proportionalmagneten, und in einer Verbindungsleitung zwischen der Steuerleitung und der Tankleitung ein zweites, unbestromt offenes 2/2-Wege-Magnetschaltventil, vorzugsweise entweder mit einem Schwarz/Weiß-Magneten oder einem Proportionalmagneten, angeordnet. Der Proportionalmagnet oder die Proportionalmagneten ermöglichen eine sehr feinfühlige Steuerung der Betätigung des Kipperzylinders sowohl beim Heben als auch beim Senken. Die ersten und zweiten 2/2-Wege-Magnetschaltventile ermöglichen eine rein elektrohydraulische Betätigungssteuerung des Kipperzylinders. Mit Bestromung nur des zweiten 2/2-Wege-Magnetschaltventils lässt sich der Kipperzylinder langsam ausfahren. Eine schnellere Ausfahrbewegung wird durch Bestromen beider 2/2-Wege-Mägnetschaltventile gesteuert, wobei der Proportionalmagnet oder die Proportionalmagneten eine sehr feinfühlige Regelung ermöglichen. Zum Anhalten des Kipperzylinders wird zumindest das zweite 2/2-Wege-Magnetschaltventil auf unbestromt geschaltet. Zum langsamen Senken wird ebenfalls das zweite 2/2-Wege-Magnetschaltventil verwendet, während zum schnellen Senken der Proportionalmagnet des ersten 2/2-Wege-Magnetschaltventils stark oder maximal bestromt wird.

Zweckmäßig ist in die jeweilige Entsperrleitung des hydraulisch entsperrbaren Rückschlagventils ein externes Drucksignal und/oder ein internes, aus der Stichleitung abgegriffenes Drucksignal einspeisbar. Diese Verschaltung bietet mehrere Möglichkeiten, nämlich die Nutzung entweder nur des internen oder des externen Drucksignals, oder wahlweise des internen oder des externen Drucksignals oder sogar beider Drucksignale.

Um wählen zu können, welches Drucksignal verwendet wird, ist bei einer zweckmäßigen Ausführungsform zum wahlweisen Einspeisen des internen Drucksignals in der Entsperrleitung ein Absperrglied, wie ein Kugelhahn, vorgesehen.

Auf baulich einfache Weise lässt sich der kompakte Block in den Kipperzylinder eingliedern oder mit einem Arbeitsleitungsanschluss des Blockes direkt an den Kipperzylinder anschließen.

Dabei ist zweckmäßig der Kipperzylinder ein Mehrkolben-Teleskopzylinder.

Die Druckquelle kann eine Konstantpumpe sein, die im Betrieb der Hydrauliksteuerung permanent angetrieben wird, eine drehzahlabhängige Fördermenge liefert, und nach Ansprechen des Umschalt-Sitzventils ihre Fördermenge verlustarm direkt in die Tankleitung fördert.

Anhand der Zeichnungen werden Ausführungsformen des Erfindungsgegenstandes erläutert. Es zeigen:
- Fig. 1: ein Blockschaltbild einer Hydrauliksteuerung eines Kipperzylinders, in drucklosem Zustand,
- Fig. 2 bis 6: Detailvarianten der in Fig. 1 gezeigten Hydrauliksteuerung, jeweils in drucklosem Zustand.

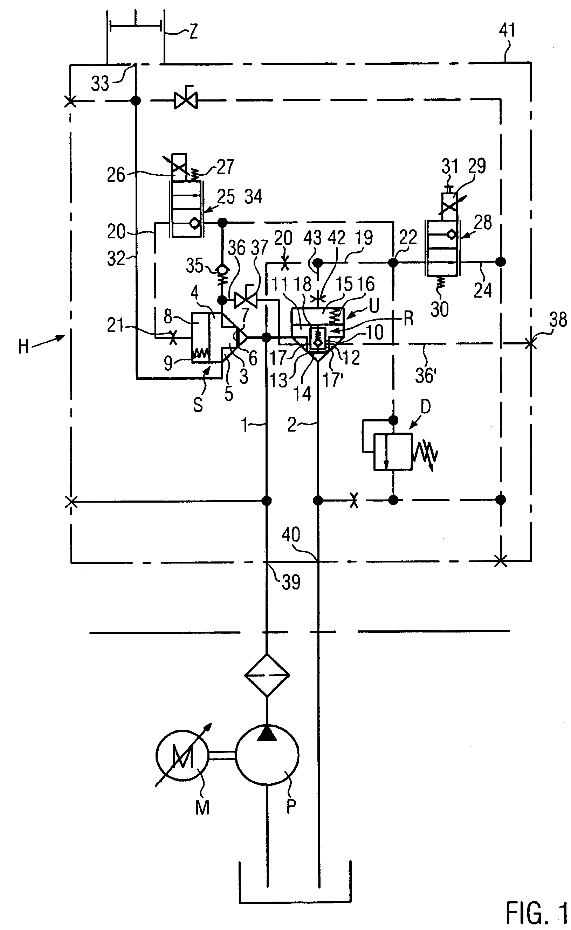

Fig. 1 ist ein Blockschaltbild einer ersten Ausführungsform einer Hydrauliksteuerung eines Kipperzylinders Z, wie er üblicherweise in einem Kippfahrzeug mit in verschiedenen Richtungen kippbarer Brücke eingesetzt wird, oder in anderen Arbeitsgeräten mit einer kippbaren Struktur. Der Kipperzylinder Z ist einseitig beaufschlagbar, d.h. gegen beispielsweise die Last der nicht gezeigten Brücke, und unter der Last einfahrbar.

Die Hydrauliksteuerung H enthält ein in Sperrstellung die Last des Kipperzylinders Z leckagefrei haltendes, schaltbares Sitzventil S, ein diesem zugeordnetes Umschalt-Sitzventil U zumindest zum Einstellen eines drucklosen Umlaufs, ein Systemdruckbegrenzungsventil D zum Begrenzen des Systemdrucks auf einen einstellbaren Maximalwert, ein entsperrbares Rückschlagventil R, und erste und zweite 2/2-Wege-Magnetschaltventile 25, 28 zum elektrischen Steuern der Betätigung des Kipperzylinders Z. Die vorerwähnten Hydraulikkomponenten sind in einen gemeinsamen Block 41 eingegliedert, der in der Ausführungsform in Fig. 1 direkt mit einem Arbeitsleitungsanschluss 33 an den Kipperzylinder Z angeschlossen ist oder (nicht gezeigt) in diesen eingegliedert sein kann.

Der Block 41 weist einen Anschluss 39 für eine mit einer Druckquelle P verbundene Druckleitung 1 sowie einen Anschluss 40 für eine Tankleitung 2 auf. Die Druckquelle P ist beispielsweise eine Konstantpumpe, die von einem Motor M (Elektromotor oder einem Verbrennungsmotor eines Kippfahrzeuges) antreibbar ist.

Das Sitzventil S ist zwischen der Druckleitung 1 und einer zum Anschluss 33 führenden Arbeitsleitung 32 angeordnet und enthält, beispielsweise im Block 41, ein Schließglied 3 mit einem Kolben 4, das von einer Schließfeder 9 in Schließrichtung beaufschlagt ist. Das Schließglied 3 weist eine Dichtfläche 7 zur Zusammenwirkung mit einem Ventilsitz 6 in einer Kammer 5 auf. Die Beaufschlagungsfläche des Kolbens 4 ist größer als die Querschnittsfläche des Ventilsitzes 6. Der Ventilsitz 6 ist zwischen der Kammer 5 und der Druckleitung 1 angeordnet. Der Kolben 4 trennt die Kammer 5 von einer Steuerkammer 8, in der die Schließfeder 9 angeordnet und die über eine Steuerleitung 20 mit dem Systemdruckbegrenzungsventil D verbunden ist, das an die Tankleitung 2 angeschlossen ist. Ausgangs der Steuerkammer 8 ist in der Steuerleitung 20 eine Blende 21 angeordnet. Das erste 2/2-Wege-Magnetschaltventil 25, das unbestromt die gezeigte Absperrstellung (in Strömungsrichtung aus der Steuerkammer 8) einnimmt, ist in der Steuerleitung 20 angeordnet. Das erste 2/2-Wege-Magnetschaltventil 25 weist eine Feder 27 auf, die die gezeigte Absperrstellung einstellt, sowie als Betätiger einen Proportionalmagneten 26, der gegen die Feder 27 arbeitet.

Von der Druckleitung 1 führt eine Bypassleitung 19 zum Systemdruckbegrenzungsventil D, wobei die Steuerleitung 20 in einem Knoten 22 an die Bypassleitung 19 angeschlossen ist. Das zweite 2/2-Wege-Magnetschaltventil 28 ist in einer Verbindungsleitung 24 vom Knoten 22 zur Tankleitung 2 angeordnet und unbestromt offen, wie durch eine Feder 30 eingestellt. Als Betätiger ist entweder ein Schwarz/Weiß-Magnet (nicht gezeigt) oder, wie gezeigt, ein Proportionalmagnet 29 vorgesehen, der gegen die Feder 30 arbeitet. Ferner ist eine manuelle Notbetätigung 31 vorgesehen.

Das Umlauf-Sitzventil U enthält ein Schließglied 10, das zur Zusammenwirkung mit einem Ventilsitz 13 eine Dichtfläche 14 sowie einen Kolben 11 aufweist, dessen Beaufschlagungsfläche größer ist als die Querschnittsfläche des Ventilsitzes 13. Der Kolben 11 trennt eine Kammer 12, z.B. im Block 41, von einer Steuerkammer 15, die über eine Leitung 43 mit der Bypassleitung 19 verbunden ist, wobei die Leitung 43 eine Blende 42 enthält.

In der gezeigten Ausführungsform in Fig. 1 ist das entsperrbare Rückschlagventil R in das Schließglied 10 des Umlauf-Sitzventils U eingegliedert, genauer in einen Durchgangskanal 18 des Schließgliedes 10. Das entsperrbare Rückschlagventil R sperrt in Strömungsrichtung von der Steuerkammer 15 zur Dichtfläche 14 des Schließgliedes 10 und weist wenigstens einen Entsperranschluss 17, 17' auf, an den in Fig. 1 sowohl eine Entsperrleitung 36 als auch eine Entsperrleitung 36' angeschlossen sind, wobei die jeweilige Entsperrleitung 36, 36' isoliert ist von der Kammer 12 bzw. dem Druck in der Kammer 12.

In der gezeigten Ausführungsform in Fig. 1 ist eine Möglichkeit gegeben, sowohl ein internes Drucksignal aus dem Kipperzylinder Z über die Entsperrleitung 36 als auch ein externes Drucksignal über die Entsperrleitung 36' zum hydraulischen Entsperren des Rückschlagventils R einzuspeisen, oder, nach Betätigen eines Absperrgliedes 37 in der Entsperrleitung 36, nur über die Entsperrleitung 36' ein externes Drucksignal aus einem Anschluss 38 des Blocks 41 einzuspeisen. Von der Steuerleitung 20 zweigt zwischen dem ersten 2/2-Wege-Magnetschaltventil 25 und dem Knoten 22 eine Stichleitung 34 ebenfalls zur Kammer 5 des Sitzventils S ab, in der ein in Strömungsrichtung zur Steuerleitung 20 sperrendes Rückschlagventil 35 enthalten ist. Die Entsperrleitung 36 zum Abgreifen des internen Drucksignals zweigt von der Stichleitung 34 zwischen dem Rückschlagventil 35 und der Kammer 5 ab, so dass bei in der Sperrstellung befindlichem Rückschlagventil 35 ein Drucksignal in der Arbeitsleitung 32 über die Kammer 5 und einen Abschnitt der Stichleitung 34 in die Entsperrleitung 36 übertragen wird. Das externe Drucksignal, das über die Entsperrleitung 36' eingespeist wird, kann auf beliebige Weise, beispielsweise abhängig von einer überwachten Betätigungssituation des Kipperzylinders Z oder andere Einrichtungen erzeugt werden, während das interne Drucksignal in der Entsperrleitung 36 die Ist-Betätigungssituation des Kipperzylinders Z reflektiert, beispielsweise falls dieser an sein Hubende gelangt oder in einer beliebigen Zwischenstellung auf ein Hindernis treffen oder angehalten werden sollte (z.B. durch ein Sicherungsseil).

Weitere, in Fig. 1 gezeigte Gehäusekanäle des Blocks 41 können zum Anschließen beispielsweise eines Manometers oder zum Entlüften der Hydrauliksteuerung verwendet werden.

### Funktion:

In Fig. 1 ist die Hydrauliksteuerung H drucklos. Die Druckquelle P wird nicht angetrieben. Wird bei in den gezeigten Schaltstellungen befindlichen 2/2-Wege-Magnetschaltventilen 25, 28 die Druckquelle P eingeschaltet, so baut sich im System ein Grunddruck auf, wobei der Kipperzylinder Z noch nicht ausgefahren wird, da der Grunddruck über die Bypassleitung 19, die Leitung 43, die Steuerleitung 20 sowohl das Sitzventil S als auch das Umlauf-Sitzventil U in die gezeigten Absperrstellungen drückt, und die Fördermenge beim Grunddruck (Rücklaufdruck) über das zweite 2/2-Wege-Magnetschaltventil 28 zunächst in die Tankleitung 2 gefördert wird.

Um den Kipperzylinder Z langsam anfahren zu lassen, wird der Proportionalmagnet 29 bestromt, um das zweite 2/2-Wege-Magnetschaltventil 28 in die Sperrstellung zu schalten. Daraufhin wird, da die Blenden 20, 21 wirken, das Schließglied 3 des Sitzventils S etwas vom Ventilsitz 6 abgehoben, während das Umlauf-Sitzventil U in der Absperrstellung verbleibt. Um die Ausfahrbewegung des Kipperzylinders Z zu beschleunigen, wird nun der Propörtionalmagnet 26 bestromt, um eine bestimmte Bewegungsgeschwindigkeit einzustellen, d.h., die Steuerkammer 8 zumindest zum Teil zu entlasten, so dass das Schließglied 3 seine volle Öffnungsstellung einnimmt. Sollte der Kipperzylinder Z entweder auf ein Hindernis treffen oder an seiner Hubendstellung ankommen, wird die dann auftretende Drucksteigerung in der Arbeitsleitung 32 über die Kammer 5 das Rückschlagventil 35 schließen und über die Entsperrleitung 36 (das Absperrglied 37 ist geöffnet) das Rückschlagventil R hydraulisch entsperren, so dass der Druck in der Steuerkammer 15 über den Durchgang 18 und den Ventilsitz 13 zur Tankleitung 2 entlastet wird, und das Schließglied 10 seine volle Öffnungsstellung einnimmt, so dass die Druckleitung 1 direkt mit der Tankleitung 2 verbunden wird und der Kipperzylinder Z anhält, jedoch nicht eingefahren wird, da dann das Sitzventil S in Sperrstellung geht.

Um den ausgefahrenen Kipperzylinder Z zunächst langsam einzufahren, wird das zweite 2/2-Wege-Magnetschaltventil 28 auf unbestromt geschaltet, so dass die Steuerkammer 8 des Sitzventils S wie auch die Steuerkammer 15 des Umschalt-Sitzventils U über die Verbindungsleitung 24 druckentlastet werden und der in der Kammer 5 wirkende Druck in der Arbeitsleitung 32 das Schließglied 3 etwas vom Ventilsitz 6 abhebt. Die langsame Geschwindigkeit kann im Falle eines Proportionalmagnetes 29 feinfühlig geregelt werden. Um den Kipperzylinder Z schnell einzufahren, wird bei unbestromten Proportionalmagneten 29 der Proportionalmagnet 26 des ersten 2/2-Wege-Magnetschaltventils 25 entsprechend der gewünschten Bewegungsgeschwindigkeit bestromt, um die Steuerkammer 8 über die Steuerleitung 20 und die Verbindungsleitung 24 zu entlasten, wobei auch die Steuerkammer 15 des Umschalt-Sitzventils U entlastet wird, so dass das Druckmittel aus der Arbeitsleitung 32 über das Sitzventil S, das Umschalt-Sitzventil U und das zweite 2/2-Wege-Magnetschaltventil 28 zur Tankleitung 2 strömt, wie auch die bei weiterhin betriebener Druckquelle P geförderte Druckmenge aus der Druckleitung 1 in die Tankleitung 2 abströmt (druckloser Umlauf).

Um den Kipperzylinder Z anzuhalten und die Last zu tragen, wird bei unbestromtem zweitem 2/2-Wege-Magnetschaltventil 28 auch das erste 2/2-Wege-Magnetschaltventil 25 unbestromt geschaltet, so dass der Druck in der Steuerkammer 8 das Sitzventil S geschlossen hält, während die Fördermenge der Druckquelle P über das aufgesteuerte Umschalt-Sitzventil U verlustarm in die Tankleitung 2 gefördert wird.

In der Ausführungsform in Fig. 1, kann, falls das Absperrglied 37 geöffnet ist, sowohl ein internes Drucksignal als auch ein externes Drucksignal das Rückschlagventil R hydraulisch entsperren, um den drucklosen Umlauf einzustellen. Wird das Absperrglied 37 geschlossen, bewirkt ein internes Drucksignal kein Aufsteuern des Umschalt-Sitzventils U, sondern nur ein externes Drucksignal in der Entsperrleitung 36'.

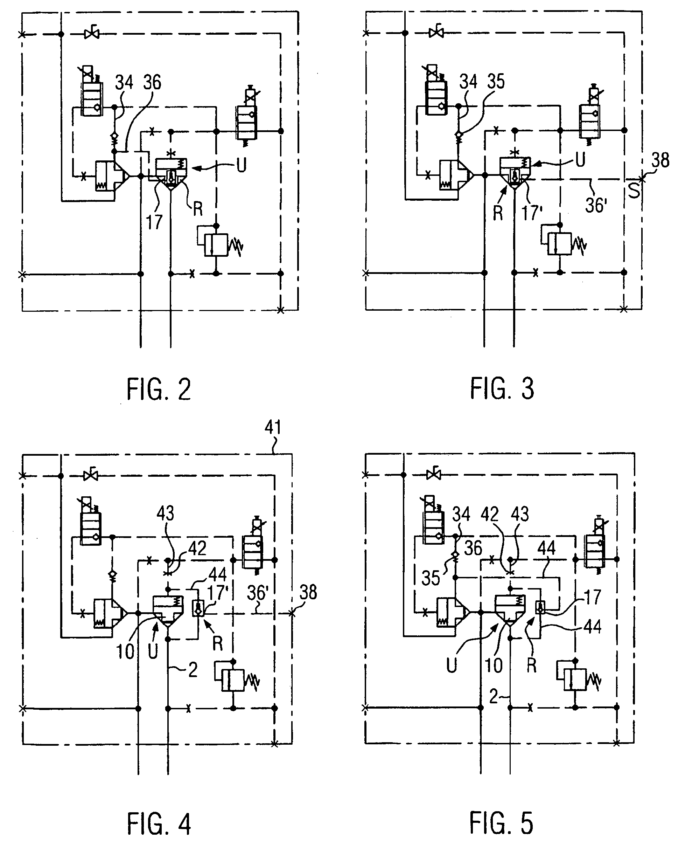

Die Ausführungsform der Hydrauliksteuerung in Fig. 2 unterscheidet sich von der von Fig. 1 dadurch, dass nur die Entsperrleitung 36 von der Stichleitung 34 absperrt, hingegen keine Entsperrleitung 36' für ein externes Drucksignal vorgesehen ist.

Die Ausführungsform in Fig. 3 unterscheidet sich von der der Fig. 1 dadurch, dass von der Stichleitung 34 überhaupt keine Entsperrleitung 36 zum Umschalt-Sitzventil U geführt ist, sondern nur die Entsperrleitung 36' zum Entsperranschluss 17' verläuft, d.h. das Rückschlagventil R im Umlauf-Sitzventil U nur durch ein externes Drucksignal hydraulisch entsperrbar ist.

Die Ausführungsform in Fig. 4 entspricht funktionell der von Fig. 3, d.h., das Umlauf-Sitzventil U ist durch ein externes Drucksignal in der Entsperrleitung 36' aufsteuerbar. Das hydraulisch entsperrbare Rückschlagventil R ist in der Ausführungsform in Fig. 4 nicht im Schließglied 10 enthalten, sondern in einer Leitungsschleife 44, die das Schließglied 10 zwischen der Leitung 43 und der Tankleitung 2 umgeht. Das hydraulisch entsperrbare Rückschlagventil R ist mit seiner Schließfeder beispielsweise in einer Kammer oder Bohrung des Blocks 41 enthalten.

Die Ausführungsform der Fig. 5 entspricht funktionell der der Fig. 2, d.h. von der Stichleitung 34 führt nur die Entsperrleitung 36 zum Entsperranschluss 17 des hydraulisch entsperrbaren Rückschlagventils R, das getrennt vom Schließglied 10 des Umlauf-Sitzventils U in der Leitungsschleife 44 zwischen der Leitung 43 und der Rücklaufleitung 2 angeordnet ist, und somit funktionell die Steuerkammer 15 und die Dichtfläche 14 umgeht. Das Umlauf-Sitzventil U ist in diesem Fall durch ein internes Drucksignal aufsteuerbar.

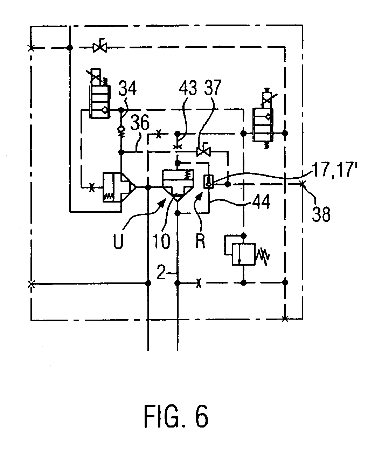

Die Ausführungsform der Fig. 6 entspricht funktionell der der Fig. 1, weil beide Entsperrleitungen 36, 36' vorgesehen sind und das Absperrglied 37 in der Entsperrleitung 36 deren wahlweise Passivierung ermöglicht. Bei einer nicht gezeigten, weiteren Ausführungsform könnte alternativ oder additiv ein Absperrglied 37 auch in der Entsperrleitung 36' vorgesehen werden. Ferner ist in Fig. 6 das hydraulisch entsperrbare Rückschlagventil R getrennt vom Schließglied 10 des Umlauf-Sitzventils U in der Leitungsschleife 44 zwischen der Leitung 43 und der Rücklaufleitung 2 angeordnet. Beide Entsperrleitungen 36, 36' führen hier beispielsweise zu einem gemeinsamen Entsperranschluss 17, 17' des hydraulisch entsperrbaren Rückschlagventils R.

## Patentansprüche

1. Hydrauliksteuerung (H) eines einfach wirkenden Kipperzylinders (Z) eines Kippfahrzeuges, mit einem die Last des Kipperzylinders (Z) haltenden, an eine Druckquelle (P) angeschlossenen, schaltbaren Sitzventil (S) zwischen einer Druckleitung (1) und einer Arbeitsleitung (32) des Kipperzylinders (Z), einem schaltbaren Umlauf-Sitzventil (U) zwischen der Druckleitung (1) und einer Tankleitung (2), einem zumindest in Abhängigkeit von einer überwachten Betätigungssituation des Kipperzylinders (Z) entsperrbaren Rückschlagventil (R), das entsperrt das Umlauf-Sitzventil (U) in eine Stellung für drucklosen Umlauf der Fördermenge der Druckquelle (P) zur Tankleitung (2) schaltet, und einem Systemdruckbegrenzungsventil (D) in einer Bypassleitung (19) zwischen der Druckleitung (1) und der Tankleitung (2), wobei zumindest das schaltbare Sitzventil (S), das Umlauf-Sitzventil (U), das entsperrbare Rückschlagventil (R) und gegebenenfalls das Systemdruckbegrenzungsventil (D) in einem gemeinsamen Block (41) untergebracht sind, **dadurch gekennzeichnet, dass** das zur Tankleitung (2) sperrende, an wenigstens einem Entsperranschluss (17, 17') über ein Drucksignal hydraulisch entsperrbare Rückschlagventil (R) in einer das Schließglied (10) des Umlauf-Sitzventils (U) umgehenden Leitungsschleife (44) angeordnet oder baulich in das Schließglied (10) des Umlauf-Sitzventils (U) eingegliedert ist.

2. Hydrauliksteuerung nach Anspruch 1, **dadurch gekennzeichnet, dass** das Umlauf-Sitzventil (U) in einer mit der Druckleitung (1) verbundenen Kammer (12) einen zwischen der Druckleitung (1) und der Tankleitung (2) angeordneten Ventilsitz (13) aufweist, der mit einer Dichtfläche (14) des in Schließrichtung federbelasteten Schließgliedes (10) zusammenwirkt, dass das Schließglied (10) einen Kolben (11) mit einer größeren Beaufschlagungsfläche als die Querschnittsfläche des Ventilsitzes (13) aufweist, dass der Kolben (11) die Kammer (12) von einer mit der Bypassleitung (19) verbundenen Steuerkammer (15) trennt, und dass das hydraulisch entsperrbare Rückschlagventil (R) funktionell zwischen der Dichtfläche (14) des Schließgliedes (10) und der Steuerkammer (15) angeordnet und mit seinem Entsperranschluss (17, 17') an eine von der Kammer (12), der Druckleitung (1) und der Tankleitung (2) isolierte Entsperrleitung (36, 36') angeschlossen ist.

3. Hydrauliksteuerung nach Anspruch 1, **dadurch gekennzeichnet, dass** das schaltbare Sitzventil (S) in einer mit der Arbeitsleitung (32) verbundenen Kammer (5) einen zwischen der Arbeitsleitung (32) und der Druckleitung (1) angeordneten Ventilsitz (6) aufweist, der mit einer Dichtfläche (7) eines in Schließrichtung federbelasteten Schließgliedes (3) zusammenwirkt, dass das Schließglied (3) einen Kolben (4) mit größerer Beaufschlagungsfläche als die Querschnittsfläche des Ventilsitzes (6) aufweist, dass der Kolben (4) die Kammer (5) von einer mit einer Steuerleitung (20) zum Systemdruckbegrenzungsventil (D) verbundenen Steuerkammer (8) trennt, und dass an die Kammer (5) eine von der Steuerleitung (20) abzweigende, ein in Strömungsrichtung zur Steuerkammer (8) sperrendes Rückschlagventil (35) enthaltende Stichleitung (34) angeschlossen ist.

4. Hydrauliksteuerung nach Anspruch 3, **dadurch gekennzeichnet, dass**, vorzugsweise im Block (41), in der Steuerleitung (20) zwischen der Steuerkammer (8) des Sitzventils (S) und der Stichleitung (34) ein erstes, unbestromt zumindest in Abströmrichtung aus der Steuerkammer (8) sperrendes 2/2-Wege-Magnetschaltventil (25), vorzugsweise mit einem Proportionalmagneten (26), und in einer Verbindungsleitung (24) zwischen der Steuerleitung (20) und der Tankleitung (2) ein zweites, unbestromt offenes 2/2-Wege-Magnetschaltventil (28), vorzugsweise entweder mit einem Schwarz/Weiß-Magneten oder einem Proportionalmagneten (29) angeordnet sind.

5. Hydrauliksteuerung nach Anspruch 2, **dadurch gekennzeichnet, dass** in die jeweilige Entsperrleitung (36, 36') ein externes Drucksignal und/oder ein internes, aus einer Stichleitung (34) abgegriffenes Drucksignal einspeisbar ist.

6. Hydrauliksteuerung nach Anspruch 5, **dadurch gekennzeichnet, dass** zum wahlweisen Einspeisen des internen Drucksignals zunächst in der Entsperrleitung (36) ein Absperrglied (37), wie ein Kugelhahn, vorgesehen ist.

7. Hydrauliksteuerung nach Anspruch 1, **dadurch gekennzeichnet, dass** der Block (41) in den Kippzylinder (Z) eingegliedert oder direkt mit einem Arbeitsleitungsanschluss (33) an den Kippzylinder (Z) angeschlossen ist.

8. Hydrauliksteuerung nach Anspruch 1, **dadurch gekennzeichnet, dass** der Kippzylinder (Z) ein Mehrkolben-Teleskopzylinder ist.

9. Hydrauliksteuerung nach Anspruch 1, **dadurch gekennzeichnet, dass** die Druckquelle (P) eine Konstantpumpe ist.

## Claims

1. Hydraulic control (H) of a single acting tipper cylinder (Z) of a tipper truck, comprising a switchable seat valve (S) holding the load of the tipper cylinder (Z), connected to a pressure source (D) and being arranged between a pressure line (1) and a working line (32) of the tipper cylinder (Z), a switchable circulation-seat valve (U) between the pressure line (1) and a tank line (2), a check valve (R) being unlockable at least depending from a monitored actuation situation of a tipper cylinder (Z), the check valve (R) when unlocked switching the circulation-seat valve into a position for pressureless circulation of the discharge quantity of the pressure source (P) to the tank line (2), and a system pressure limiting valve (D) in a bypass line (19) between the pressure source (1) and the tank line (2), wherein at least the switchable seat valve (S), the circulation-seat valve (U), the unlockable check valve (R) and optionally the system pressure limiting valve (D) are accommodated in a common block (41), **characterized in that** the check valve (R) blocking in direction to the tank line (2), hydraulically unlockable at at least one unlocking port (17, 17') by a pressure signal is arranged in a circuit loop (44) deviating the closure member (10) of the circulation-seat valve (U) or is structurally incorporated into the closure member (10) of the circulation-seat valve (U).

2. Hydraulic control (H) according to claim 1, **characterized in that** the circulation-seat valve (U) has a valve seat (13) arranged between the pressure line (1) and the tank line (2), in a chamber (12) connected to the pressure line (1) the valve seat (13) co-acting with a sealing surface (14) of the closure member (10) being spring loaded in closing direction, that the closure member (10) comprises a piston (11) having a larger pressure receiving surface than the cross section area of the valve seat (13), that the piston (11) separates the chamber (12) from a control chamber (15) connected with the bypass line (19), and that the hydraulically unlockable check valve (R) is functionally arranged between the sealing surface (14) of the closure member (10) and the control chamber (15) and is connected with its unlocking port (17, 17') to an unlocking line (36, 36') being isolated from the chamber (12), the pressure line (1) and the tank line (2).

3. Hydraulic control (H) according to claim 1, **characterized in that** the switchable seat valve (S) has a valve seat (6) arranged between the working line (32) and the pressure line (1) in a chamber (5) connected to the working line (32) the valve seat (6) co-acting with a sealing surface (7) of a closure member (3) being spring loaded in closing direction, that the closure member (3) comprises a piston (4) having a larger pressure receiving surface than the cross section area of the valve seat (6), that the piston (4) separates the chamber (5) from a control chamber (8) connected with a control line (29) extending to the system pressure limiting valve (D), and that a tapping line (34) is connected to the chamber (5), the tapping line (34) branching off from the control line (20) and containing a check valve (35) blocking in flow direction towards the control chamber (8).

4. Hydraulic control (H) according to claim 3, **characterized in that**, preferably in the block (41), a first 2/2-way-solenoid switching valve (25), preferably having a proportional solenoid (26), is arranged between the control chamber (8) of the switchable seat valve (S) and the tapping line (34), the 2/2-way-solenoid switching valve (25), without electric actuation is blocking at least in outflow direction out of the control chamber (8), and that in a connection line (24) between the control line (20) and the tank line (2) a second 2/2-way-solenoid switching valve (28) is arranged in a connection line (24) between the control line (20) and the tank line (2), the second 2/2-way-solenoid switching valve (28) being open without electric actuation, and, preferably having either a black/white-solenoid or a proportional solenoid (29).

5. Hydraulic control (H) according to claim 2, **characterized in that** either an external pressure signal and/or an internal pressure signal tapped from a tapping line (34) can be supplied into the respective unlocking line (36, 36').

6. Hydraulic control (H) according to claim 5, **characterized in that** for selectively supplying the internal pressure signal a blocking member (37), like a ball cock, is provided in the unlocking line (36).

7. Hydraulic control (H) according to claim 1, **characterized in that** the block (41) is incorporated into the tipper cylinder (Z) and is directly connected with a working line port (33) to the tipper cylinder (Z).

8. Hydraulic control (H) according to claim 1, **characterized in that** the tipper cylinder (Z) is a telescope cylinder having several pistons.

9. Hydraulic control (H) according to claim 1, **characterized in that** the pressure source (P) is a fixed displacement pump.

## Revendications

1. Commande hydraulique (H) d'un vérin de basculement (Z) à simple effet d'un véhicule à benne basculante ou élément basculant, comprenant une vanne à siège (S) commutable, qui maintient la charge du vérin de basculement (Z), est raccordée à une source de pression (P) et est placée entre une conduite de pression (1) et une conduite de travail (32) du vérin de basculement (Z), une vanne à siège de circulation (U) commutable entre la conduite de pression (1) et une conduite de réservoir (2), une valve anti-retour (R) déblocable au moins en fonction d'une situation d'actionnement surveillée du vérin de basculement (Z), et qui, en position débloquée, commute la vanne à siège de circulation (U) dans une position pour une circulation hors de pression du débit de la source de pression (P) vers la conduite de réservoir (2), et une vanne de limitation de la pression-système (D) dans une conduite en bipasse (19) entre la conduite de pression (1) et la conduite de réservoir (2), commande hydraulique dans laquelle au moins la vanne à siège (S) commutable, la vanne à siège de circulation (U), la valve anti-retour (R) déblocable et, le cas échéant, la vanne de limitation de la pression-système (D) sont logées dans un bloc commun (41),
**caractérisée en ce que** la valve anti-retour (R) bloquant vers la conduite de retour (2), qui peut être débloquée hydrauliquement au niveau d'un raccord de déblocage (17, 17') par l'intermédiaire d'un signal de pression, est agencée dans une boucle de conduite (44) contournant l'organe de fermeture (10) de la vanne à siège de circulation (U), ou est intégrée ou incorporée par construction dans l'organe de fermeture (10) de la vanne à siège de circulation (U).

2. Commande hydraulique selon la revendication 1, **caractérisée en ce que** la vanne à siège de circulation (U) présente dans une chambre (12) reliée à la conduite de pression (1), un siège de vanne (13), qui est agencé entre la conduite de pression (1) et la conduite de réservoir (2), et interagit avec une surface d'étanchéité (14) de l'organe d'obturation (10) chargé par ressort dans la direction de fermeture, **en ce que** l'organe d'obturation (10) comporte un piston (11) avec une surface active plus grande que la surface de section transversale du siège de vanne (13), **en ce que** le piston (11) isole la chambre (12) d'une chambre de commande (15) reliée à la conduite en bipasse (19), et **en ce que** la valve anti-retour (R) déblocable hydrauliquement est agencée fonctionnellement entre la surface d'étanchéité (14) de l'organe d'obturation (10) et la chambre de commande (15), et est raccordée avec son raccord de déblocage (17, 17'), à une conduite de déblocage (36, 36') isolée de la chambre (12), de la conduite de pression (1) et de la conduite de réservoir (2).

3. Commande hydraulique selon la revendication 1, **caractérisée en ce que** la vanne à siège (S) commutable présente dans une chambre (5) reliée à la conduite de travail (32), un siège de vanne (6), qui est agencé entre la conduite de travail (32) et la conduite de pression (1), et interagit avec une surface d'étanchéité (7) d'un organe d'obturation (3) chargé par ressort dans la direction de fermeture, **en ce que** l'organe d'obturation (3) comporte un piston (4) avec une surface active plus grande que la surface de section transversale du siège de vanne (6), **en ce que** le piston (4) isole la chambre (5) d'une chambre de commande (8) reliée à une conduite de commande (20) menant à la vanne de limitation de la pression-système (D), et **en ce qu'**à la chambre (5) est raccordée une conduite latérale de dérivation (34) dérivée de la conduite de commande (20) et renfermant une valve anti-retour (35) bloquant dans la direction d'écoulement vers la chambre de commande (8).

4. Commande hydraulique selon la revendication 3, **caractérisée en ce que**, de préférence dans le bloc (41), sont agencées, dans la conduite de commande (20) entre la chambre de commande (8) de la vanne à siège (S) et la conduite latérale de dérivation (34), une première électrovanne 2/2 voies (25), qui comporte de préférence un aimant proportionnel (26), et qui, dans l'état non alimenté en courant, bloque au moins dans la direction d'écoulement sortant de la chambre de commande (8), et, dans une conduite de liaison (24) entre la conduite de commande (20) et la conduite de réservoir (2), une deuxième électrovanne 2/2 voies (28), qui est ouverte dans l'état non alimenté en courant, et qui comporte de préférence, soit un aimant tout ou rien, soit un aimant proportionnel (29).

5. Commande hydraulique selon la revendication 2, **caractérisée en ce qu'**il est possible d'envoyer dans ladite conduite de déblocage (36, 36'), un signal de pression externe et/ou un signal de pression interne prélevé d'une conduite latérale de dérivation (34).

6. Commande hydraulique selon la revendication 5, **caractérisée en ce que** pour l'envoi sélectif du signal de pression interne, il est tout d'abord prévu dans la conduite de déblocage (36), un organe d'arrêt (37) comme un robinet à boisseau sphérique.

7. Commande hydraulique selon la revendication 1, **caractérisée en ce que** le bloc (41) est intégré ou incorporé au vérin de basculement (Z), ou bien est raccordé directement, avec un raccord conduite de travail (33), au vérin de basculement (Z).

8. Commande hydraulique selon la revendication 1, **caractérisée en ce que** le vérin de basculement (Z) est un vérin télescopique à pistons multiples.

9. Commande hydraulique selon la revendication 1, **caractérisée en ce que** la source de pression (P) est une pompe à cylindrée constante.
